# FASCICULE DE BREVET EUROPEEN

(11) **EP 0 606 179 B1**
(45) Date de publication et mention de la délivrance du brevet: **09.04.1997**
(21) Numéro de dépôt: 94400014.0
(22) Date de dépôt: 04.01.1994
(51) Int. Cl.: B60N 2/44

(54) **Dispositif d'accrochage des bords des coiffes de coussins de sièges**
Haltevorrichtung für die Kanten der Sitzkissenbezüge
Fastening device for the edges of the cover of a seat cushion

(30) Priorité: 07.01.1993 FR 9300072
(43) Date de publication de la demande: 13.07.1994
(73) Titulaire: BERTRAND FAURE AUTOMOBILE "B.F.A.", F-91300 Massy (FR)
(72) Inventeur: Bernard, Vincent, F-88650 Anould (FR); Le Breton Alain, F-92410 Ville d'Avray (FR); Lhuissier, Pascal, F-45190 Beaugency (FR); Perthuis Jean-Marc, F-28700 Beuille Le Comte (FR); Stouvenel, Thierry, F-88210 Senones (FR)
(74) Mandataire: Burbaud, Eric

(56) Documents cités:
- EP-A- 0 300 043
- DE-A- 2 153 069
- DE-A- 3 535 353
- DE-A- 3 732 836
- DE-A- 4 215 521
- GB-A- 541 917
- GB-A- 896 090

## Description

L'invention est relative aux dispositifs pour accrocher les bords des coiffes -généralement en tissu, simili ou cuir- qui recouvrent les coussins des sièges, notamment de véhicules, sur les armatures rigides de ces sièges.

Elle vise plus particulièrement le cas où la base de l'armature est constituée par une plaque en tôle ou matière plastique dure comprenant un rebord rabattu de façon à former une rigole périphérique ouverte vers le bas ou vers l'arrière selon que le coussin considéré est un coussin d'assise ou de dossier, et où le dispositif d'accrochage considéré comprend un profilé en J rapporté, notamment par couture, le long du bord de coiffe à accrocher, l'accrochage désiré étant obtenu en faisant chevaucher par ledit profilé l'aile extérieure de la rigole.

Dans les modes de réalisation connus de ces dispositifs (voir par exemple DE-A-3 535 353 et DE-A-3 732 836), l'aile de la rigole sur laquelle est accroché le profilé en J est orientée perpendiculairement au plan moyen de la plaque bordée par cette rigole, ce qui présente l'inconvénient suivant : la rigole doit présenter une relativement grande profondeur et son aile extérieure, une relativement grande hauteur, ce qui rend relativement fragile l'accrochage du profilé sur cette aile, car ladite aile présente en outre une faible épaisseur.

L'invention permet de remédier à cet inconvénient.

A cet effet, un dispositif d'accrochage du genre en question selon l'invention, destiné à accrocher le bord de la coiffe recouvrant un coussin de siège sur l'aile extérieure d'une rigole bordant une plaque constitutive de l'armature dudit siège, rigole ouverte vers l'extérieur du coussin, comprend encore un profilé en J rapporté, notamment par couture, le long dudit bord de coiffe et chevauchant ladite aile, et il est caractérisé en ce que la portion d'aile chevauchée par le profilé en J comprend une série de pattes planes crevées dans la rigole, en ce que les pattes planes sont orientées parallélement au plan de la plaque, en ce que les bases de ces pattes sont prolongées vers l'extérieur de la rigole par un rebord continu coplanaire à ces pattes et en ce que ce sont les pattes planes qui sont chevauchées par une portion recourbée en J du profilé.

Dans des modes de réalisation préférés, on a recours en outre à l'une et/ou à l'autre des dispositions suivantes :
- l'aile intérieure de la rigole est raccordée à un bandeau latéral, de la plaque, dont au moins la portion la plus en saillie de la face extérieure se trouve dans le plan de la face extérieure de la tête de l'ensemble profilé-bord de coiffe qui chevauche les pattes,
- des picots crevés dans la rigole sont prévus pour coopérer aux fins de verrouillage avec un bec extérieur prévu à l'extrémité libre de la portion recourbée en J du profilé,
- le rebord continu est lui-même prolongé par un rabat plié à angle droit complétant avec ce rebord une gouttière latérale ouverte vers le coussin,
- dans un dispositif selon l'alinéa précédent, les pattes s'étendent parallèlement à la plaque, vers l'intérieur de la rigole et le profilé est conformé de façon à comprendre une tête en forme de J et un pied prolongeant à angle droit le grand pan du J,
- le profilé selon l'alinéa précédent -dit A ci-après- comprend entre sa tête et son pied une zone amincie formant charnière,
- dans un dispositif selon au moins l'alinéa A, le pied du profilé en J est bordé par un talon latéral s'étendant du même côté que la portion incurvée du J de façon telle que, lors de l'accrochage, la tête du profilé chevauche les pattes alors que le pied avec son talon chevauche jointivement le rabat,
- dans le cas où le dispositif d'accrochage selon au moins l'alinéa A est appliqué aux coiffes des dossiers à rabattements indépendants composant une banquette arrière de véhicule, l'ensemble latéral rigole-gouttière d'un dossier donné disposé du côté de l'autre dossier est formé dans la plaque de base dudit dossier donné en même temps qu'un ensemble latéral rigole-gouttière adjacent et symétrique est formé dans une plaque adjacente destinée à constituer la base d'armature dudit autre dossier de la banquette, cette double formation étant assurée par emboutissage et découpe d'une seule et même plaque-mère propre à être utilisée comme base d'armature pour le dossier d'une banquette arrière de véhicule non décomposable en deux dossiers à rabattements indépendants.

Dans ce qui suit, l'on va décrire quelques modes de réalisation de l'invention en se référant aux dessins ci-annexés d'une manière bien entendu non limitative.

La figure 1, de ces dessins, montre en coupe horizontale partielle un dossier de siège de véhicule dont le bord de la coiffe est accroché sur l'armature conformément à l'invention.

La figure 2 est une vue en perspective, portions arrachées, de la portion de dossier de la figure 1.

Les figures 3, 4 et 5 illustrent trois étapes successives de l'accrochage du bord de coiffe sur l'armature.

La figure 6 montre en coupe horizontale schématique le dossier d'une banquette arrière de véhicule comprenant une armature selon l'invention.

Les figures 7 et 8 montrent à plus grande échelle, encore en coupe horizontale, une portion de ladite armature telle qu'utilisée respectivement pour un dossier monobloc de banquette et pour un dossier de banquette décomposable en deux portions à rabattements indépendants.

Les figures 9 et 10 montrent schématiquement en coupe horizontale partielle deux dossiers de siège de véhicule pour lesquels l'accrochage de la coiffe est exécuté selon respectivement deux variantes de l'invention.

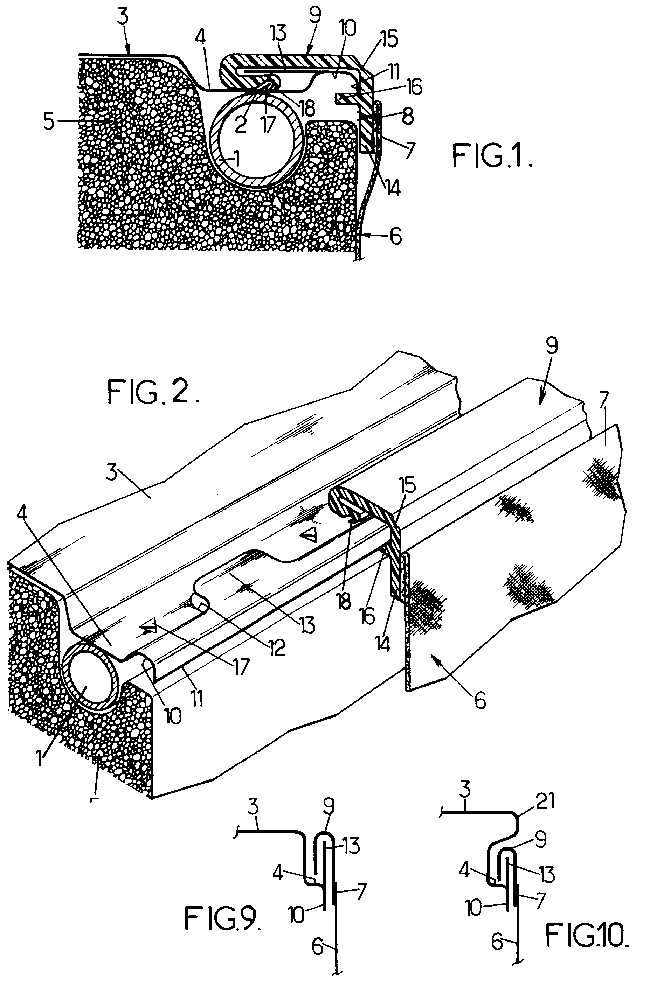

L'armature du dossier de siège montré par les figures 1 et 2 comprend :
- au moins un renfort tel qu'un tube métallique 1,
- et, soudée sur ce tube en 2, une plaque rigide arrière 3 en métal dans les deux bords verticaux de laquelle sont embouties deux rigoles 4 ouvertes vers l'arrière.

Cette armature 1-4 supporte un coussin formé par un corps 5 en mousse revêtu par une coiffe 6, notamment en tissu, velours, cuir ou simili.

Le problème à résoudre est l'accrochage du bord 7 de la coiffe 6 sur le bord de la plaque 3.

A cet effet, d'une façon connue en soi, on rapporte sur le bord 7, notamment par couture en 8, un profilé 9 en matière plastique présentant la forme d'un J et on monte la portion en J de ce profilé sur l'aile extérieure de la rigole 4.

Mais ici cette rigole, cette aile, ce profilé et ce montage sont conçus de façon originale.

Pour ce qui est de la rigole 4, on la prévoit relativement large et peu profonde et on prolonge extérieurement son aile extérieure par un rebord 10 s'étendant parallèlement à la plaque 3.

Ce rebord 10 est lui-même prolongé ici par un rabat 11 plié à angle droit vers l'avant du dossier, ce qui forme une gouttière dont l'ouverture est orientée dans le sens inverse de celui de la rigole, c'est-à-dire ici vers l'avant du dossier.

Le rabat 11 est situé sensiblement dans le prolongement vers l'arrière de la face latérale du corps en mousse 5.

On évide en outre dans l'aile extérieure de la rigole 4 une série de lumières 12 (figure 2) permettant de dégager par "crevé" une série de pattes 13 orientées parallèlement au plan de la plaque 3 vers l'intérieur de la rigole 4.

C'est cette série de pattes 13 qui constitue le bord rigide ici chevauché par la portion recourbée en J du profilé 9.

On voit que ce chevauchement s'effectue selon une direction parallèle au plan de la plaque 3 et non plus, comme auparavant, selon une direction perpendiculaire à ce plan.

L'intérêt de cette remarque réside en ce que les tensions exercées par la coiffe sont orientées selon ladite direction perpendiculaire : la résistance opposée à ces tensions est donc ici accrue.

En outre, et comme bien visible sur la perspective de la figure 2, la résistance de chaque patte 13 à la flexion autour de sa racine est supérieure à celle d'un simple bord rabattu tel que l'"aile extérieure" d'une rigole selon l'art antérieur : il n'existe en effet ici aucune amorce de pliage comparable au pli d'un rabattement, chaque patte étant prolongée dans son propre plan par le rebord continu 10 qui fait corps avec elle, ce qui fait pratiquement contribuer l'ensemble de ce rebord à la résistance considérée, c'est-à-dire au "raidissement" de la patte.

Pour éviter que le bord 7 de la coiffe soit disposé sur la face arrière du dossier, ce qui pourrait le détériorer, on fait comprendre au profilé 9 en J un pied 14 qui est lui-même orienté perpendiculairement à la tête de ce profilé et qui porte la ligne d'assemblage 8.

Bien que ce pied 14 puisse être simplement plié le long de la gouttière 10 par la tension de la coiffe, on préfère le monter d'une façon quasiment pivotante sur la tête autour d'une charnière 15 constituée par une portion amincie de raccordement entre tête et pied.

On prévoit en outre, en saillie latérale sur la face, du pied 14, tournée du côté de la portion recourbée en J du profilé 9, un talon ou redan 16 localisé de façon à se placer jointivement le long de la tranche du rabat 11 constituant l'aile extérieure de la gouttière 10 à la fin de l'accrochage.

On assure ainsi le verrouillage de cet accrochage.

Le décalage entre le plan moyen P de la plaque 3 et le plan moyen parallèle des pattes 13, situé lui-même au niveau du fond de la gouttière 10, est choisi sensiblement égal à l'épaisseur du profilé 9 : de la sorte, après accrochage de la coiffe, les faces extérieures de la plaque 3 et du profilé 9 sont coplanaires, ce qui protège le profilé contre tout accrochage accidentel.

Avec le dispositif décrit ci-dessus l'accrochage de la coiffe s'effectue comme suit.

Dans une opération antérieure, on rapporte par couture en 8 sur les bords 7 de la coiffe 6 les pieds 14 des profilés 9 en J, lesquels s'étendent alors en leur position déployée.

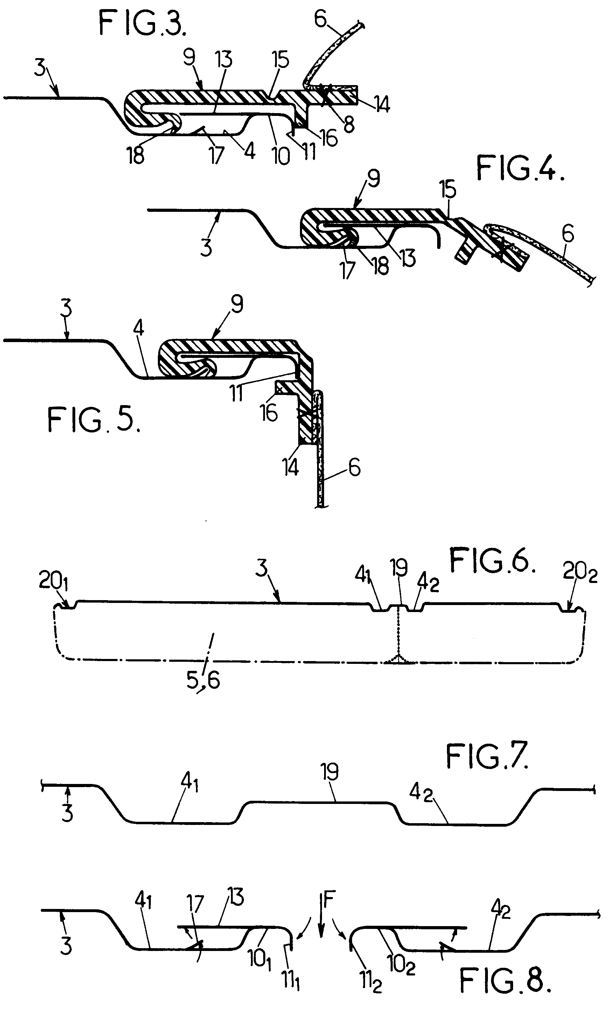

Lors de l'accrochage proprement dit, après avoir comprimé la mousse constitutive du corps 5, on place les portions recourbées en J des têtes des profilés 9 dans les portions dégagées des rigoles 4 (figure 3).

Puis on fait glisser chaque tête parallèlement au plan P en direction de l'extérieur du dossier de façon telle que cette tête vienne chevaucher à fond la série de pattes 13 en regard (figure 4).

On fait alors pivoter de 90° chaque pied 14 autour de la charnière 15, ce qui place le redan 16 juste devant la tranche de l'aile extérieure 11 de la gouttière 10 correspondante et l'on met la coiffe 6 sous tension (figure 5).

La résistance offerte à cette tension par le profilé ainsi accroché est excellente, vu en particulier que les efforts de tension se trouvent répartis sur les pattes 13 et sur les éléments 10 et 11 au lieu d'être appliqués directement et exclusivement sur l'aile de la rigole.

Il est à noter également que l'accrochage ainsi obtenu est conservé grâce au talon 16 même si la tension exercée sur la coiffe cesse, comme c'est souvent le cas lors du travail du coussin, lequel travail se traduit notamment par des compressions élastiques, et donc des écrasements et amincissements, de son corps en mousse 5.

On voit en outre sur les figures des picots 17 crevés dans les fonds des rigoles 4, propres à coopérer à la fin de l'accrochage de la coiffe avec des becs 18 prévus extérieurement sur les extrémités libres des portions recourbées en J du profilé 9.

Sur les figures 6 à 8 on a illustré une application de la présente invention au dossier d'une banquette arrière de véhicule, application permettant d'utiliser une seule et même plaque-mère 3 pour constituer à volonté l'armature d'un tel dossier de type monobloc ou l'armature d'un tel dossier décomposé en deux dossiers se prêtant à des rabattements indépendants (dossiers dits "1/3, 2/3" si leurs largeurs sont différentes, ou "1/2, 1/2", si leurs largeurs sont identiques).

Selon cette application, la plaque-mère 3 emboutie d'origine, destinée au dossier monobloc (5,6) schématisé en traits mixtes sur la figure 6, comprend deux rigoles 4₁ et 4₂ séparées par un pontet 19 (figures 6 et 7).

Si l'on se contente d'une telle destination, on pratique par emboutissage dans ladite tôle uniquement les découpes nécessaires à la formation des pattes 13 et picots 17 dans les deux bords extrêmes 20₁ et 20₂ de la plaque.

Si au contraire on la destine à deux dossiers indépendants correspondant aux pointillés de la figure 6, on fait subir à la plaque 3 une ou plusieurs opérations d'emboutissage et découpe ayant pour effet de découper ladite plaque en deux plaques partielles selon la flèche F (figure 8), de recourber selon les deux rebords 10₁ et 10₂ prolongés par deux rabats 11₁ et 11₂ les deux bords de la coupure ainsi effectuée et de faire apparaître les découpes ci-dessus, génératrices des pattes 13 et picots 17, dans les deux rigoles 4₁ et 4₂.

Une même plaque-mère 3 peut ainsi servir indifféremment aux deux versions de dossier monobloc ou de dossier dédoublé en deux dossiers.

En suite de quoi, et quel que soit le mode de réalisation adopté, on obtient finalement des dispositifs d'accrochage de coiffe dont la constitution, la mise en oeuvre et les avantages résultent suffisamment de ce qui précède.

Comme il va de soi, et comme il résulte déjà de ce qui précède, l'invention ne se limite nullement à ceux de ses modes d'application et de réalisation qui ont été plus spécialement envisagés ; elle en embrasse, au contraire, toutes les variantes, notamment celles où l'accrochage de coiffe considéré concernerait une assise de siège plutôt qu'un dossier et celles schématisées sur les figures 9 et 10 ci-après décrites.

Dans chacune de ces variantes, c'est directement l'aile extérieure de la rigole 4 qui est constituée par des pattes 13 crevées dans le fond de la rigole et qui s'étendent, cette fois-ci, perpendiculairement au plan P de la plaque 3, lesdites pattes s'étendant vers l'arrière du dossier et étant prolongées au niveau de leurs racines, correspondant au fond de la rigole, par le rebord continu plan 10, lequel s'étend ainsi vers l'avant du siège.

Dans la variante perfectionnée de la figure 10, en outre, l'aile intérieure la rigole 4 est raccordée à un bandeau plan 21, prolongeant à angle droit le bord de la plaque 3, bandeau dont la face extérieure s'étend dans le prolongement de la face extérieure de l'ensemble profilé 9-bord 7 de coiffe : la présence dudit bandeau 21 évite tout accrochage intempestif entre, d'une part, le profilé 9 et le bord 7 de coiffe fixé sur ce profilé et, d'autre part, des obstacles extérieurs (bagages, mains ou pieds des usagers...).

En somme, l'ensemble d'accrochage selon cette variante de la figure 10 correspond pratiquement à celui de la figure 1 que l'on aurait rabattu à angle droit vers l'avant du siège.

Dans chacune des deux variantes qui viennent d'être décrites en référence aux figures 9 et 10 :
- le profilé 9 n'a plus de pied replié à angle droit comparable au pied 14 ci-dessus,
- des picots ayant le même rôle que ceux désignés par la référence 17 ci-dessus, c'est-à-dire destinés à coopérer aux fins de verrouillage avec un bec extérieur, du profilé 9, analogue au bec 18 ci-dessus, peuvent être crevés dans l'aile intérieure de la rigole 4.

## Revendications

1. Dispositif pour accrocher le bord (7) de la coiffe (6) recouvrant un coussin de siège (5) sur l'aile extérieure d'une rigole (4) bordant une plaque (3) constitutive de l'armature dudit siège, rigole ouverte vers l'extérieur du coussin, comprenant un profilé (9) en J rapporté le long dudit bord de coiffe et chevauchant ladite aile, caractérisé en ce que la portion d'aile chevauchée par le profilé en J comprend une série de pattes planes (13) crevées dans la rigole (4), en ce que les pattes planes (13) sont orientées parallèlement au plan de la plaque (3), en ce que les bases de ces pattes sont prolongées vers l'extérieur de la rigole par un rebord continu (10) coplanaire à ces pattes et en ce que ce sont les pattes planes (13) qui sont chevauchées par une portion recourbée en J dudit profilé (9).

2. Dispositif d'accrochage selon la revendication 1, caractérisé en ce que l'aile intérieure de la rigole (4) est raccordée à un bandeau latéral, de la plaque (3), dont au moins la portion la plus en saillie de la face extérieure se trouve dans le plan de la face extérieure de la tête de l'ensemble profilé (9)-bord (7) de coiffe qui chevauche les pattes (13).

3. Dispositif d'accrochage selon l'une quelconque des revendications 1 et 2, caractérisé en ce que des picots (17) crevés dans la rigole (4) sont prévus pour coopérer aux fins de verrouillage avec un bec extérieur (18) prévu à l'extrémité libre de la portion recourbée en J du profilé.

4. Dispositif d'accrochage selon l'une quelconque des précédentes revendications, caractérisé en ce que le rebord continu (10) est lui-même prolongé par un rabat (11) plié à angle droit complétant avec ce rebord une gouttière latérale ouverte vers le coussin.

5. Dispositif d'accrochage selon la revendication 4, caractérisé en ce que les pattes (13) s'étendent parallèlement à la plaque (3), vers l'intérieur de la rigole (4) et en ce que le profilé (9) est conformé de façon à comprendre une tête en forme de J et un pied (14) prolongeant à angle droit le grand pan du J.

6. Dispositif d'accrochage selon la revendication 5, caractérisé en ce que le profilé (9) comprend entre sa tête et son pied une zone amincie (15) formant charnière.

7. Dispositif d'accrochage selon au moins les revendications 4 et 5, caractérisé en ce que le pied (14) du profilé en J est bordé par un talon latéral (16) s'étendant du même côté que la portion incurvée du J de façon telle que, lors de l'accrochage, la tête du profilé chevauche les pattes alors que le pied avec son talon chevauche jointivement le rabat (11).

8. Dispositif d'accrochage selon l'une quelconque des revendications 5 et suivantes, appliqué aux coiffes des dossiers à rabattements indépendants composant une banquette arrière de véhicule, caractérisé en ce que l'ensemble latéral rigole (4₁)-gouttière (10₁,11₁) d'un dossier donné disposé du côté de l'autre dossier est formé dans la plaque de base dudit dossier donné en même temps qu'un ensemble latéral rigole (4₂)-gouttière (10₂,11₂) adjacent et symétrique est formé dans une plaque adjacente destinée à constituer la base d'armature dudit autre dossier de la banquette, cette double formation étant assurée par emboutissage et découpe d'une seule et même plaque-mère (3) propre à être utilisée comme base d'armature pour le dossier d'une banquette arrière de véhicule non décomposable en deux dossiers à rabattements indépendants.

9. Dispositif d'accrochage selon la revendication 8, caractérisée en ce que la plaque-mère comporte, embouties côte à côte dans une zone médiane avec interposition d'un pontet (9), deux rigoles parallèles (4₁,4₂).

## Claims

1. A device for fastening the edge (7) of the cover (6) covering a cushion of a seat (5) to the outer flange of a channel (4) on the outside edge of a plate (3) forming a part of the frame of said seat, which channel is open towards the outside of the cushion, the device comprising a J-section member (9) attached along the edge of the cover and placed astride said flange, the device being characterized in that said flange portion having the J-section member placed astride it comprises a series of plane tabs (13) punched out from the channel (4), in that the plane tabs (13) are oriented parallel to the plane of the plate (3), in that the bases of said tabs are extended outwardly from the channel by a continuous rim (10) that is coplanar with the tabs and in that a hook-shaped curved portion of said J-section member (9) is placed astride the plane tabs (13).

2. A fastening device according to claim 1, characterized in that the inside flange of the channel (4) is connected to a lateral strip of the plate (3), of which the furthest-projecting portion of the outside face lies in the same plane as the outside face of the head portion of the attached-together cover edge (7) and section member (9) placed astride the tabs (13).

3. A fastening device according to claim 1 or 2, characterized in that spikes (17) are punched out from the channel (4) to co-operate for locking purposes with an outside catch (18) provided at the free end of the hook-shaped curved portion of the J-section member.

4. A fastening device according to any preceding claim, characterized in that the continuous rim (10) is itself extended by a lip (11) folded at right angles thereto and co-operating with said rim to form a lateral gutter that is open towards the cushion.

5. A fastening device according to claim 4, characterized in that the tabs (13) extend parallel to the plate (3) towards the inside of the channel (4) and in that the section member (9) is shaped so as to comprise a J-shaped head and an extension (14) that extends the larger flat of the J-shape at right angles.

6. A fastening device according to claim 5, characterized in that the section member (9) includes a narrowed zone (15) between its hook portion and its extension, thereby forming a hinge.

7. A fastening device according to claims 4 and 5 at least, characterized in that the extension (14) of the J-section member is provided on one side with a bead (16) extending in the same direction as the curved portion of the J-shape such that, during fastening, the head of the section member is disposed astride the tab while the extension and its bead fits over and touches the lip (11).

8. A fastening device according to any one of claims 5 et seq, applied to covers for seat backs having independently foldable portions and suitable for constituting a vehicle backseat, characterized in that the channel-and-gutter side assembly (4₁, 10₁, 11₁) of a given back portion disposed adjacent to another back portion is formed in the baseplate of said given back portion simultaneously with the adjacent and symmetrical channel-and-gutter lateral assembly (4₂, 10₂, 11₂) being formed in an adjacent plate for constituting the base of the frame of said other back portion of the backseat, said two assemblies being formed by stamping and cutting out a single common main plate (3) suitable for use as the frame base for the back of a vehicle backseat that is not subdivisible into independently foldable back portions.

9. A fastening device according to claim 8, characterized in that the main plate includes two parallel channels (4₁, 4₂) stamped side by side in an intermediate zone and united by means of a bridge (9).

## Patentansprüche

1. Vorrichtung zur Befestigung des Randes (7) des ein Sitzkissen (5) bedeckenden Bezuges (6) an den Außenflügel einer Vertiefung (4), die eine Platte (3) einfaßt, welche Bestandteil des Gestells des besagten Sitzes ist, wobei die Vertiefung vom Kissen aus gesehen nach außen offen ist, welche eine Profilschiene (9) in Form eines J entlang dem Rand des Bezuges und den Flügel überdeckend umfaßt,
dadurch **gekennzeichnet,** daß
der von der Profilschiene in Form eines J überdeckte Teil des Flügels eine Folge von ebenen Klammern (13) aufweist, die in die Vertiefung (4) geschnitten sind, daß die ebenen Klammern (13) parallel zur Ebene der Platte (3) ausgerichtet sind, daß die Basis dieser Klammern von der Vertiefung aus nach außen verlängert sind in Form einer zu den Klammer koplanaren durchgehenden Randleiste (10), und daß die ebenen Klammern (13) es sind, die von einem gekrümmten Teil in Form eines J der besagten Profilschiene (9) überragt werden.

2. Befestigungsvorrichtung nach Anspruch 1,
dadurch gekennzeichnet, daß
der Innenflügel der Vertiefung (4) mit einem Seitenband der Platte (3) verbunden ist, wobei wenigstens der am weitesten vorspringende Teil der Außenfläche sich in der Ebene der Außenfläche des Kopfes des Profilschienenaufbaus (9)-Rand (7) des Bezuges, der die Klammern (13) überragt, befindet.

3. Befestigungsvorrichtung nach einem der Ansprüche 1 und 2,
dadurch gekennzeichnet, daß
in die Rinne (4) gestanzte Zähne (17) vorgesehen sind, um zum Zwecke der Verriegelung mit einer Außennase (18) am freien Ende des gebogenen Teils in Form eines J der Profilschiene zusammenzuwirken.

4. Befestigungsvorrichtung nach einem der vorangehenden Ansprüche,
dadurch gekennzeichnet, daß
die durchgehende Randleiste (10) selbst durch eine Abrundung (11) verlängert wird, die im rechten Winkel gebogen ist und mit dieser Randleiste eine seitliche zum Kissen hin offene Rinne bildet.

5. Befestigungsvorrichtung nach Anspruch 4,
dadurch gekennzeichnet, daß
die Klammern (13) sich parallel zur Platte (3) in die Vertiefung (4) hinein erstrecken und daß die Profilschiene (9) derart geformt ist, daß sie einen Kopf in Form eines J und einen Fuß (14) aufweist, der im rechten Winkel die große Seite des J verlängert.

6. Befestigungsvorrichtung nach Anspruch 5,
dadurch gekennzeichnet, daß
die Profilschiene (9) zwischen ihrem Kopf und ihrem Fuß eine sich verengende Zone (15) aufweist, die einen Übergang bildet.

7. Befestigungsvorrichtung nach wenigstens den Ansprüchen 4 und 5,
dadurch gekennzeichnet, daß
der Fuß (14) der Profilschiene in Form eines J von einem seitlichen Steg (16) berandet ist, der sich von derselben Seite wie der einwärts gebogene Teil des J in der Art erstreckt, daß bei der Befestigung der Kopf der Profilschiene die Klammern überdeckt, während der Fuß mit seinem Steg die Abrundung (11) überdeckt.

8. Befestigungsvorrichtung nach einem der Ansprüche 5 und folgende, angewendet auf Bezüge von Rückenlehnen, die unabhängig umklappbar sind und Teil einer Rücksitzbank eines Fahrzeugs sind,
dadurch gekennzeichnet, daß
der Aufbau seitliche Vertiefung (4₁)-Rinne (10₁, 11₁) einer gegebenen neben einer anderen Rückenlehne angeordneten Rückenlehne in der Basisplatte der besagten gegebenen Rückenlehne gleichzeitig mit einem benachbarten und symmetrischen Aufbau seitliche Vertiefung (4₂)-Rinne (10₂, 11₂) in einer benachbarten Platte gebildet wird, die dazu bestimmt ist, das Basisgestell der besagten anderen Rückenlehne der Sitzgruppe zu bilden, wobei diese Doppelformation durch Tiefziehen und Herausschnitten aus ein und derselben Mutterplatte (3) hergestellt wird, die sich dazu eignet, als Basis für das Gestell für die Rückenlehne einer Rücksitzbank eines Fahrzeugs zu dienen, die nicht in zwei Rücklehnen zum unabhängigen Umklappen zerlegbar ist.

9. Befestigungsvorrichtung nach Anspruch 8,
dadurch gekennzeichnet, daß
die Mutterplatte auf beiden Seiten in einem Mittelteil mit einer Wölbung (9) dazwischen zwei parallele tiefgezogene Rinnen (4₁, 4₂) aufweist.
